(19) Europäisches Patentamt

European Patent Office

Office européen des brevets

(11) **EP 1 053 053 B1**

(12) **FASCICULE DE BREVET EUROPEEN**

(45) Date de publication et mention
de la délivrance du brevet:
**11.12.2002 Bulletin 2002/50**

(21) Numéro de dépôt: **99902622.2**

(22) Date de dépôt: **09.02.1999**

(51) Int Cl.$^7$: **B01D 53/68**, C02F 1/00,
C02F 1/28

(86) Numéro de dépôt international:
**PCT/FR99/00275**

(87) Numéro de publication internationale:
**WO 99/040999 (19.08.1999 Gazette 1999/33)**

(54) **PROCEDE D'ELIMINATION DE COMPOSES HALOGENES CONTENUS DANS UN GAZ OU UN LIQUIDE**

VERFAHREN ZUR ENTFERNUNG VON HALOGENVERBINDUNGEN IN EINEM GAS ODER EINER FLÜSSIGKEIT

METHOD FOR ELIMINATING HALOGENATED COMPOUNDS CONTAINED IN A GAS OR LIQUID

(84) Etats contractants désignés:
**DE ES FR GB IT NL**

(30) Priorité: **11.02.1998 FR 9801631**

(43) Date de publication de la demande:
**22.11.2000 Bulletin 2000/47**

(73) Titulaire: **INSTITUT FRANCAIS DU PETROLE**
**92852 Rueil-Malmaison Cedex (FR)**

(72) Inventeur: **NEDEZ, Christophe**
**F-30340 Salindres (FR)**

(56) Documents cités:
**EP-A- 0 233 394**  **EP-A- 0 234 433**
**EP-A- 0 301 272**

**Description**

La présente invention est relative à un procédé pour éliminer les composés halogénés, et plus particulièrement les composés chlorés, contenus dans un gaz ou un liquide.

Dans un certain nombre d'applications industrielles, il est nécessaire d'éliminer les composés halogénés, notamment les composés chlorés, contaminant le flux, qu'il soit gazeux ou liquide.

Un exemple illustratif est l'élimination de composés halogénés, notamment de composés chlorés, contenus dans le gaz ou le liquide provenant du réformage catalytique, dans l'industrie pétrolière.

Un des buts du réformage catalytique est d'obtenir des hydrocarbures présentant un indice d'octane accru. Les réactions de cyclisation et d'aromatisation d'hydrocarbures seront ainsi souhaitées, l'indice d'octane d'un hydrocarbure étant d'autant plus grand qu'il sera ramifié. cyclique voire aromatique. Le réformage catalytique produira en parallèle de l'hydrogène.

Habituellement, ces réactions de cyclisation et d'aromatisation d'hydrocarbures ont lieu en présence de catalyseurs hétérogènes bimétalliques chlorés. Ces catalyseurs chlorés sont à base d'alumine et comportent, le plus souvent, du platine et un autre métal tel que par exemple l'étain. le rhénium, et l'iridium. La présence de chlore dans lesdits catalyseurs est importante car, ajouté à l'alumine, il assure l'acidité globale du système et participe à la redispersion du platine au cours du temps et permet ainsi de stabiliser l'activité catalytique du catalyseur.

Cependant, l'ajout de chlore n'est pas une solution sans inconvénient. En effet, au cours du temps, une élution partielle du chlorc, notamment sous forme de HCl, est constatée. Cette élution se traduit d'abord par la nécessité constante de recharger le catalyseur en chlore. Elle conduit également à la présence d'HCl et d'autres composés chlorés dans les effluents gazeux et liquides issus du réformage catalytique, ce qui pourra conduire, d'une part, à un problème de corrosion de l'installation, et d'entre part, à la formation d'autres produits indésirables et nuisibles au fonctionnement de l'installation.

Un procéde de réformage catalytique fonctionne classiquement sous forte pression, souvent d'environ 20 bar, voire au-delà.

Des procédés régénératifs, ou de nouvelle génération, ont récemment été mis au point et se développent de plus en plus sur le terrain. Ces procédés sont caractérisés par un fonctionnement sous une pression nettement inférieure, voisine de 3 à 15 bar, voire inférieure.

En sortie d'un procédé de réformage traditionnel, les effluents contiennent majoritairement de l'hydrogène, des hydrocarbures saturés légers comme par exemple du méthane, de l'éthane..., des traces de composés chlorés notamment de HCl, et d'eau.

Le document EP-A-0 234 433 décrit un procédé d'élimination de composés halogénés contenus dans un fluide par contact avec une composition obtenue à partir d'une alumine sur laquelle on a déposé un alcalin suivi d'une calcination entre 200 et 1200°C.

La EP-A-0 233 394 décrit un procédé analogue avec un composé formé d'un alcalino-terreux déposé sur une alumine suivi d'une calcination entre 150 et 500°C.

La Demanderesse a constaté, et ce de façon tout à fait surprenante et inattendue, que dans les procédés régénératifs, les adsorbants traditionnels. jusqu'alors utilisés en réformage catalytique à plus haute pression, à hase d'alumine de haute surface, éventuellement comprenant un composé alcalin ou alcalino-terreux, présentaient des inconvénients notables.

En aval des procédés régénératifs, et probablement du fait d'un fonctionnement à basse pression, outre l'hydrogène, les hydrocarbures saturés légers, les traces de composés chlorés notamment de HCl, et l'eau, la présence des traces d'hydrocarbures insaturés comme par exemple de l'éthylène, du propylène, du butadiène..., a également été observée.

Les traces d'hydrocarbures insaturés présents dans les flux en aval des procédés régénératifs, se transforment au moins partiellement en composés organochlorés en présence de composés chlorés, au contact avec l'alumine. Ces composés organochlorés. après de multiples réactions entre eux et/ou avec d'autres composés insaturés également présents dans le flux et à la surface des absorbants de l'art antérieur, conduisent a des oligomères chlorés plus ou moins aromatiques de masses moléculaires élevées appelés "huiles vertes" ou "green oils".

Après leur formation, les "huiles vertes" ou "green oils" ne peuvent plus être éliminés par les adsorbants traditionnels et migrent en direction de l'aval de l'adsorbeur. Ils peuvent alors entraîner des bouchages de l'installation. Dès lors, une baisse significative de la durée de vie de l'adsorbant est notée : dans certains cas, une baisse de 4 à 5 fois a été observée.

Le but de la présente invention est de proposer un procédé mettant en oeuvre une composition qui réduira substantiellement, voire supprimera, la formation des oligomères halogénés, et en particulier des oligomères chlorés appelés "huiles vertes" ou "green oils".

Un autre but de la présente invention est de proposer un procédé mettant en oeuvre une composition qui permettra l'élimination plus efficace des composés halogénés, en particulier les composés chlorés, contenus dans un gaz ou un liquide.

Ces buts sont atteints par la présente invention qui a pour objet un procédé pour éliminer les composés halogénés, et pour réduire, voire supprimer, la formation des oligomères halogénés contenus dans un gaz ou un liquide.

Dans tout ce qui va suivre l'expression "le procédé d'élimination, de réduction, et/ou de suppression des composés halogénés" désignera "le procédé d'élimination, de réduction, et/ou de suppression à la fois des composés organiques ou inorganiques halogénés, ainsi que les oligomères halogénés de masses moléculaires élevées". Cette expression désignera aussi le procédé ayant pour but d'éviter la formation des oligomères halogénés précités.

Selon une première variante, l'invention concerne le procédé d'élimination, de réduction, et/ou de suppression des composés halogénés, contenus dans un gaz ou dans un liquide, caractérisé en ce que l'on met en contact le gaz ou le liquide avec une composition obtenue par dépôt sur une alumine d'au moins un composé comprenant au moins un élément choisi parmi les alcalins, suivie après le dépôt, d'une calcination de l'alumine à une température d'au moins 600°C, ladite composition présentant une surface spécifique d'au plus 110 m$^2$/g.

Selon une seconde variante, l'invention concerne le procédé d'élimination, de réduction, et/ou de suppression des composés halogénés, contenus dans un gaz ou dans un liquide. caractérisé en ce que l'on met en contact le gaz ou le liquide avec une composition obtenue par dépôt sur une alumine d'au moins un composé comprenant au moins un élément choisi parmi les alcalino-terreux, et les terres rares, suivie après le dépôt, d'une calcination de l'alumine à une température d'au moins 600°C.

Selon une troisième variante, l'invention concerne le procédé d'élimination, de réduction, et/ou de suppression des composés halogénés, contenus dans un gaz ou dans un liquide, caractérisé en ce que l'on met en contact le gaz ou le liquide avec une composition obtenue par dépôt sur une alumine d'au moins un composé comprenant au moins un élément choisi parmi les alcalino-terreux, suivie après le dépôt, d'une calcination de l'alumine à une température d'au moins 600°C, ladite composition présentant une surface spécifique d'au plus 140 m$^2$/g.

Enfin, selon une quatrième variante, l'invention concerne le procédé d'élimination, de réduction, et/ou de suppression des composés halogènes, contenus dans un gaz ou dans un liquide, caractérisé en ce que l'on met en contact le gaz ou le liquide avec une composition obtenue par dépôt sur une alumine d'au moins un composé comprenant au moins un élément choisi parmi les terres rares, suivie après le dépôt, d'une calcination de l'alumine à une température d'au moins 500°C, et plus particulièrement d'au moins 600°C, ladite composition présentant une surface spécifique d'au plus 250 m$^2$/g.

La composition mise en oeuvre dans le procédé, objet de la présente invention, peut se présenter sous des formes diverses. Elle peut, par exemple, se présenter sous la forme de poudres, de billes, d'extrudés, de concassés, ou de monolithes.

Le premier constituant essentiel de la composition est l'alumine.

L'alumine de départ utilisée présente, en général, une surface spécifique d'au moins 30 m$^2$/g, de préférence d'au moins 100 m$^2$/g, encore plus préférentiellement d'au moins 200 m$^2$/g.

Dans la présente invention, toutes les surfaces spécifiques indiquées sont des surfaces mesurées par la méthode BET. On entend par surface mesurée par la méthode BET, la surface spécifique déterminée par adsorption d'azote conformément à la norme ASTM D) 3663-78 établie à partir de la méthode BRAUNER-EMMETT-TELLER décrite dans " The Journal of the American Chemical Society", 60, 309 (1938).

Cette alumine de départ peut présenter également, un volume poreux total (VPT) d'au moins 15 cm$^3$/g, de préférence d'au moins 20 cm$^3$/g, encore plus préférentiellement d'au moins 25 cm$^3$/g. Ce volume poreux total est mesuré de la façon suivante : on détermine la valeur de la densité de grain et de la densité absolue : les densités de grain (Dg) et absolue (Da) sont mesurées par la méthode de pienométrie respectivement au mercure et à l'helium, le VPT est donné par la formule

$$[1/Dg] - [1/Da]$$

Les procédés de préparation des alumines présentant les caractéristiques de volume poreux total et de surface spécifique nécessaires à la mise en oeuvre du procédé selon l'invention sont connus de l'homme du métier.

En ce qui concerne l'alumine, la poudre d'alumine utilisée comme matière de départ pour la préparation de la composition selon l'invention, peut être obtenue par des procédés classiques tels que le procédé par précipitation ou gel, et le procédé par déshydratation rapide d'un hydroxyde d'alumine tel que l'hydrate de Bayer (hydrargillite). Cette dernière alumine est celle préférée de l'invention.

S'il s'agit de billes d'alumine, elles peuvent être issues d'une mise en forme par coagulation en gouttes. Ce type de billes peut par exemple être préparé selon l'enseignement des brevets EP-A-0 015 801 ou EP-A-0 097 539. Le contrôle de la porosité peut être réalisé en particulier selon le procédé décrit dans le brevet EP-A-0 097 539 par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant. Ladite phase organique peut en particulier être un hydrocarbure, l'agent surfactant ou émulsionnant est par exemple du Galoryl EM 10®.

L'alumine en forme de billes peut être aussi obtenue par agglomération d'une poudre d'alumine. L'agglomération en forme de billes s'effectue directement sur la poudre d'alumine par technologie tournante. Un entend par technologie tournante tout appareil dans lequel l'agglomération s'effectue par mise en contact et rotation du produit à granuler sur lui-même. Comme appareil de ce type, on peut citer le drageoir tournant, le tambour tournant. Ce type de procédé permet d'obtenir des billes de dimensions et de répartitions de pores contrôlées, ces dimensions et ces répartitions étant, en général, créées pendant l'étape d'agglomération. Le contrôle des volumes des pores de diamètre donné peut également être réalisé au cours de cette étape d'agglomération par un réglage adéquat du débit d'introduction de la poudre d'alumine et éventuellement d'eau, de la vitesse de rotation de l'appareil ou lors de l'introduction d'une amorce de mise en forme.

Les extrudés d'alumine, peuvent être obtenus par malaxage puis extrusion d'une matière à base d'alumine, ladite matière pouvant être issue de la déshydratation rapide d'hydrargillite ou de la précipitation d'un gel d'alumine. Le contrôle de la porosité des extrudés peut être realisé par les conditions opératoires de malaxage de cette alumine avant extrusion. L'alumine peut aussi être melangée lors du malaxage à des porogènes. A titre d'exemple, les extrudés peuvent être préparés par le procédé de préparation décrit dans le brevet US-A-3.856.708.

Les concassés d'alumine, peuvent être issus du concassage de tout type de matière à base d'alumine telle que, par exemple, des billes obtenues par tous types de procédé (coagulation en gouttes, drageoir ou tambour tournant) ou des extrudés. Le contrôle de la porosité de ces concassés se fait par le choix de la matière à base d'alumine que l'on concasse pour les obtenir.

Quelle que soit la forme de l'alumine, la porosité peut être créée par différents moyens comme le choix de la granulométrie de la poudre d'alumine ou le mélange de plusieurs poudres d'alumine de différentes granulométries. Une autre méthode consiste à mélanger à la poudre d'alumine, avant ou pendant les étapes d'agglomération ou d'extrusion, un composé, appelé porogène, disparaissant totalement par chauffage et créant ainsi une porosité dans l'alumine.

Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés n'est pas critique et est déterminée par le volume poreux désiré.

Suite à sa mise en forme, l'alumine obtenue peut être soumise à différentes opérations destinées à améliorer leur résistance mécanique telles qu'un mûrissement par maintien dans une atmosphère à taux d'humidité contrôlée, suivi d'une calcination puis d'une imprégnation de l'alumine par une solution d'un ou plusieurs acides et un traitement hydrothermal en atmosphère confinée.

Enfin, après ces différents traitements, l'alumine est séchée et calcinée.

Le deuxième constituant essentiel de la composition est l'élément alcalin, alcalino-terreux, et terre rare, appelé également l'élément dopant.

La composition selon l'invention peut comporter un élément ou une combinaison d'éléments alcalin(s) et/ou alcalino-terreux et/ou terre(s) rare(s). Ainsi, dans la suite de l'exposé, ce qui sera décrit pour un élément dopant sera applicable à la combinaison déléments alcalin(s) et/ou alcalino-terreux et/ou terre(s) rare(s), aussi appelés éléments dopants.

Le dépôt de l'élément dopant, c'est-à-dire l'élément alcalin, alcalino-terreux, et terre rare, sur ou dans l'alumine peut être réalisé par toute méthode connue de l'homme du métier.

Il peut être réalisé, par exemple, par imprégnation de l'alumine déjà préparée avec les éléments dopants pu des précurseurs de ces éléments, ou par mélange des éléments dopants ou des précurseurs de ces éléments avec l'alumine au cours ou en aval de la mise en forme de cette dernière. Le dépôt de l'élément dopant dans l'alumine peut être également réalisé par coprécipitation de l'alumine et des éléments dopants ou leurs précurseurs.

Dans le cas d'un dépôt par imprégnation, celui-ci se fait de manière connue par mise en contact de l'alumine avec une solution, un sol ou un gel comprenant au moins un élément dopant sous forme d'oxyde ou de sel ou d'un de leurs précurseurs.

L'opération est réalisée en général par trempage de l'alumine dans un volume déterminé de solution d'au moins un précurseur d'au moins un élément dopant. Par solution d'un précurseur d'un élément dopant, on entend une solution d'au moins un sel ou d'au moins un composé de l'élément ou des éléments dopants, ces sels et composés étant thermiquement décomposables.

La concentration en sel de la solution est choisie en fonction de l'élément dopant à déposer sur l'alumine.

La surface d'imprégnation de l'élément dopant est déterminée par le volume de solution adsorbé. Ainsi, le volume adsorbé de l'élement dopant est égal au volume poreux total de l'alumine à imprégner. Il est également possible d'imprégner l'alumine par trempage de celle-ci dans la solution de précurseur d'element dopant et d'éliminer l'excès de solution par égouttage.

Selon un mode préféré, l'élément dopant est deposée par imprégnation à sec.

Les composés servant à déposer sur l'alumine, peuvent être choisis parmi les composés organiques ou inorganiques. Ils sont choisis de préférence parmi les composés morganiques.

Par composés inorganiques, on désigne plus particulièrement les sels inorganiques tels que par exemple les carbonates, les bicarbonates, les cyanures, les cyanates, les alcoxylates, les hydroxydes, et les nitrates.

Comme mentionné précédemment, lesdits composés comprennent au moins un élément choisi parmi les alcalins notamment le lithium, le sodium, le potassium, le rubidium, et le césium, les alcalino-terreux notamment le magnésium, le calcium, le strontium, le baryum, et les terres rares notamment le cérium, le praséodyme, et le lanthane.

Selon un mode de réalisation particulier de l'invention, les composés servant à déposer sur l'alumine sont choisis, de préférence, parmi les nitrates, les hydroxydes, les carbonates, et les bicarbonates, de sodium et de potassium.

La composition utilisée dans le procédé selon l'invention, est obtenue en soumettant l'alumine sur laquelle est déposé le(s) composé(s) précité(s), à une opération de séchage et de calcination. L'alumine, après le dépôt, peut être calcinée à une température d'au moins 600°C lorsque l'élément dopant est choisi parmi les alcalins et les alcalino-terreux, et à une température d'au moins 500°C, et plus particulièrement d'au moins 600°C lorsque l'élément dopant est choisi parmi les terres rares.

Dans le cas où une combinaison d'éléments dopants dont l'un au moins est choisi parmi les alcalins, est déposée sur l'alumine, le température de calcination est d'au moins 600°C.

Il est également possible de répéter ces opérations avec la même alumine, après l'avoir séchée et calcinée, et de déposer successivement plusieurs éléments sur ladite alumine et sur des surfaces déterminées, qui peuvent varier.

Généralement la température de calcination, après le dépôt sur l'alumine, ne dépasse pas 1200°C.

La durée de calcination n'est pas en soi critique. Elle dépendra de la température de calcination : généralement, plus la température de calcination est élevée, moindre sera la durée de calcination.

La surface spécifique de la composition, après calcination, lorsque l'élément dopant est au moins un élément choisi parmi les alcalins, est d'au plus 110 m$^2$/g, de préférence d'au plus 100 m$^2$/g, et encore plus préférentiellement d'au plus 90 m$^2$/g.

Après calcination, la surface spécifique de la composition, lorsque l'élément dopant est au moins un élément choisi parmi les alcalino-terreux, est d'au plus 140 m$^2$/g, de préférence d'au plus 120 m$^2$/g, et encore plus préférentiellement d'au plus 90 m$^2$/g.

La surface spécifique de la composition, après calcination, lorsque l'élément dopant est au moins un élément choisi parmi les terres rares, est d'au plus 250 m$^2$/g, de préférence d'au plus 200 m$^2$/g, et encore plus préférentiellement d'au plus 150 m$^2$/g.

Plus particulièrement, la surface spécifique de la composition, après calcination, indépendamment de la nature de l'élément dopant, est d'au moins 5 m$^2$/g, de préférence d'au moins 10 m$^2$/g, et encore plus préférentiellement d'au moins 20 m$^2$/g.

Lors du dépôt sur l'alumine du composé comprenant au moins un élément choisi parmi les alcalins, les alcalino-terreux et les terres rares, la concentration de la solution en composé est choisie de telle manière que la teneur globale massique de l'élément ou des éléments alcalins, alcalino-terreux, et terres rares dans la composition, soit comprise entre 0.5 % et 70 % en poids par rapport au poids total de la composition.

Cette teneur est, de préférence, comprise entre 0,5 % et 40 % en poids, et plus préférentiellement comprise entre 2 % et 35 % en poids, par rapport au poids total de la composition.

Sans vouloir être lié par une théorie, on peut penser que l'amélioration sensible de l'élimination de composés halogénés comme par exemple le HCI d'une part, et la forte baisse voire la suppression de la formation des oligomères halogénés notamment les oligomères chlorés appelés "huiles vertes" ou "green oils" d'autre part, sont probablement dues à la transformation d'au moins une partie de l'alumine de la composition, en aluminate, au cours d'une calcination aux températures indiquées précédemment.

En effet, pendant la calcination, il est probable d'obtenir une inclusion au moins partielle du ou des composé(s) comprenant le(s) élément(s) choisi(s) parmi les alcalins, les alcalino-terreux, et les terres rares, pour conduire la formation de l'aluminate correspondant.

L'aluminate formé, serait présent dans les couches superficielles de la composition, ce qui permettra d'éviter la formation d'entités Al-Halogène, notamment Al-Cl, retenus par la composition (l'entité Al-Halogène, en particulier Al-Cl, est formée en présence de l'alumine de haute surface spécifique éventuellement dopée, et de composés halogénés, en particulier chlorés contenus dans le flux), et empêcherait, par conséquent, leur réaction avec les hydrocarbures insaturés pour conduire aux composés halogénés, notamment aux oligomères chlorés ou "green oils".

Le procédé selon l'invention, trouve son application dans tous les domaines industriels nécessitant l'élimination de composés halogénés, notamment de composés chlorés comme HCI et/ou la réduction voire la suppression de la formation d'oligomère halogénés, notamment d'oligomères chlorés appelés "huiles vertes" ou "green oils", contenus

EP 1 053 053 B1

dans un gaz ou un liquide, provenant notamment d'un réformage catalytique régénératif ou de nouvelle génération.

Par réformage catalytique régénératif ou de nouvelle génération, on entend habituellement des procédés caractérisés par un fonctionnement sous une pression d'au plus 15 bar, plus particulièrement d'au plus 12 bar, et par exemple de 3 à 10 bar.

Le procédé selon l'invention est plus particulièrement destiné à l'élimination de composés chlorés, et plus particulièrement à l'élimination de l'HCl, présents dans un gaz ou un liquide, à la réduction substantielle et/ou la suppression de la formation des oligoinères chlorés ou "green oils", également présents dans un gaz ou un liquide.

Comme décrit précédemment, en sortie de réformage catalytique, les effluents gazeux sont majoritairement composés d'hydrogène, d'hydrocarbures saturés, de traces d'hydrocarbures insaturés, de traces de composés halogénés, et d'eau. Lorsque les effluents contiennent de l'eau, la teneur volumique en eau est en général comprise entre 1 et 50 ppm, à la pression de l'unité. Dans ces conditions, la teneur volumique en HCl, par exemple, est souvent comprise entre 0,2 et 30 ppm.

Le procédé selon l'invention convient aussi bien pour élimination de composés halogénés et/ou à la réduction substantielle voire la suppression de la formation des oligomères chlorés ou "green oils", contenus dans un gaz ou un liquide exempt d'eau, que dans un gaz ou un liquide contenant de l'eau.

Par exempt d'eau, on entend une teneur en eau inférieure à 1 ppm, à la pression de l'unité.

Les exemples suivants illustrent l'invention sans, toutefois, en limiter sa portée.

## EXEMPLES

### Exemple 1 : Préparation des échantillons

Le tableau I décrit les différents échantillons (compositions) et récapitule leurs conditions de préparation.

L'alumine de l'échantillon 1 est un oxyde obtenu sans dopage, dont le taux de sodium résiduel s'explique par la matière première utilisée (hydrargillite), qui résulte du cycle Bayer. Elle est granulée sous la forme de billes présentant un diamètre inclus entre 2 et 5mm. Le lot utilisé de l'alumine de l'échantillon 1 présente une surface spécifique de 349 $m^2$/g.

Afin de préparer l'échantillon 2, l'alumine de l'échantillon 1 est calcinée à une température de 750°C durant deux heures et présente alors une surface spécifique de 80 $m^2$/g. Puis on procède à une imprégnation dite à sec de l'alumine, suivie d'un séchage assuré à 100°C durant une nuit : puis survient une étape de calcination durant trois heures à 350°C.

Tous les autres échantillons (compositions) sont préparés par imprégnation dite à sec de l'alumine de l'échantillon 1. Après l'imprégnation, un séchage est assuré à 100°C durant une nuit, puis survient une étape de calcination. durant 3 heures, à une température précisée dans le Tableau I. Sont également précisés dans le Tableau I, les précurseurs employés pour réaliser l'imprégnation de l'alumine.

Les échantillons 1, 2 et 3 sont des échantillons comparatifs, selon l'art antérieur. Les échantillons 4 à 7 correspondent à des compositions selon l'invention.

Tableau 1 :

| ECHANTILLON | ELEMENT X | COMPOSE DE X | TENEUR X (% MASSIQUE) | CALCINATION (°C) | SURFACE ($m^2$/g) |
|---|---|---|---|---|---|
| 1 | - | - | 0,2 | - | 349 |
| 2 | Na | NaOH | 6.7 | 350 | 52 |
| 3 | Na | NaOH | 6,7 | 400 | 147 |
| 4 | Na | NaOH | 6.7 | 820 | 72 |
| 5 | Na | $NaNO_3$ | 6,7 | 820 | 62 |
| 6 | K | KOH | 10.8 | 820 | 73 |
| 7 | Ca | $Ca(NO_3)_2$ | 9,4 | 800 | 97 |

Détection des "huiles vertes" ou "green oils"

En ce qui concerne la formation des "green oils", un mode opératoire a été mis au point afin de détecter, à partir de propylène, la formation d'organochlorés, dans un premier temps de 2-chloropropane, sur plusieurs compositions étudiées.

Pour ce faire, 10 g de la composition sont placés durant 15 heures dans un réacteur maintenu à 50°C, à travers lequel circule, en boucle fermée, de l'hydrogène contenant 2 % de propylène, 24 mmoles de HCl, et 82 mmoles d'eau. Un examen de la phase gazeuse est fait in situ par infrarouge (bande à 1300 cm$^{-1}$) et un dosage par spectrométrie de masse permet de suivre l'apparition éventuelle de chloropropane.

Du chloropropane est, dans ces conditions, formé lorsque les échantillons 1, 2 et 3 sont utilisés.

Par contre, aucune formation de chloropropane ou d'autres hydrocarbures chlorés n'est constatée avec les compositions 4, 5, 6 et 7.

Coasdorption HCl + H$_2$O

Les expériences d'adsorption de HCl sont conduites dans une balance maintenue en permanence sous flux gazeux avec l'hélium comme gaz vecteur, sous pression atmosphérique.

A l'hélium (320ml/min) est ajouté un mixte HCl-H$_2$O (respectivement 9400 - 500 ppm).

L'échantillon placé dans la balance, à la hauteur de 280 mg, est prétraité, sous l'hélium sec, à 300°C durant 2 heures. L'expérience en elle-même peut commencer après retour et maintien de la température à 30°C.

Le Tableau II récapitule les résultats obtenus

L'etude des échantillons (compositions) est effectuée au bout d'un temps d'expérience de 200 heures.

Tableau II

| ECHANTILLONS | COADSORPTION HCl + H$_2$O[a] | |
| --- | --- | --- |
| | HCl + H$_2$O (%) | HCl DOSE (%) |
| 1 | 16 | 11,3 |
| 2 | 8 | 5,5 |
| 3 | 22 | 15.6 |
| 4 | 24,5 | 16 |
| 5 | 26 | 18,8 |
| 6 | 25 | 16,2 |
| 7 | 25,5 | 17,1 |

[a] *Dans le cas d'une coadsorption, la reprise de masse notée est due à la fois à de la captation de HCl et à de l'adsorption d'eau.*

D'après les résultats obtenus. il apparaît clairement qu'une alumine non dopée et non calcinée (échantillon 1) et/ou une alumine dopée mais calcinée à une température insuffisante de 400°C (échantillon 3) et/ou une alumine calcinée à haute température mais avant le dopage (échantillon 2) ne réduit ni ne supprime la formation des "huiles vertes".

En conclusion, les compositions 4 à 7 selon l'invention, empêchent la formation des "huiles vertes" et présentent une meilleure adsorption en HCl.

**Revendications**

**1.** Procédé d'élimination, de réduction, et/ou de suppression des composés halogénés contenus dans un gaz ou dans un liquide, **caractérisé en ce que** l'on met en contact le gaz ou le liquide avec une composition obtenue par dépôt sur une alumine d'au moins un composé comprenant au moins un élément choisi parmi les alcalins, suivie après le dépôt, d'une calcination de l'alumine à une température d'au moins 600°C, ladite composition présentant une surface spécifique d'au plus 110 m$^2$/g.

**2.** Procédé d'élimination, de réduction, et/ou de suppression des composés halogénés contenus dans un gaz ou dans un liquide, **caractérisé en ce que** l'on met en contact le gaz ou le liquide avec une composition obtenue par dépôt sur une alumine d'au moins un composé comprenant au moins un élément choisi parmi les alcalino-terreux, et les terres rares, suivie après le dépôt d'une calcination de l'alumine à une température d'au moins 600°C.

**3.** Procédé d'élimination, de réduction, et/ou de suppression des composés halogénés contenus dans un gaz ou dans un liquide, **caractérisé en ce que** l'on met en contact le gaz ou le liquide avec une composition obtenue par dépôt sur une alumine d'au moins un composé comprenant au moins un élément choisi parmi les alcalino-terreux, suivie après le dépôt, d'une calcination de l'alumine à une température d'au moins 600°C, ladite composition présentant une surface spécifique d'au plus 140 $m^2/g$.

4. Procédé d'élimination, de réduction, et/ou de suppression des composés halogénés contenus dans un gaz ou dans un liquide, **caractérisé en ce que** l'on met en contact le gaz ou le liquide avec une composition obtenue par dépôt sur une alumine d'au moins un composé comprenant au moins un élément choisi parmi les terres rares suivie après le dépôt, d'une calcination de l'alumine à une température d'au moins 500°C, et plus particulièrement d'au moins 600°C, ladite composition présentant une surface spécifique d'au plus 250 $m^2/g$.

5. Procédé selon l'une quelconque des revendications 1 à 4, **caractérisé en ce que** les composés servant à déposer sur l'alumine sont des composés inorganiques et plus particulièrement des sels inorganiques.

6. Procédé selon l'une quelconque des revendications 1 à 5, **caractérisé en ce que** les composés comprennent au moins un élément choisi parmi le lithium, le sodium, le potassium, le rubidium, le césium, le magnésium, le calcium, le strontium, le baryum, le cérium, le praséodyme, et le lanthane.

7. Procédé selon l'une quelconque des revendications 1 à 4, **caractérisé en ce que** l'alumine, après le dépôt, est calcinée à une température ne dépassant pas 1200°C.

8. Procédé selon la revendication 1, **caractérisé en ce que** la surface spécifique de la composition, après calcination, est d'au plus 100 $m^2/g$, et encore plus préférentiellement d'au plus 90 $m^2/g$.

9. Procédé selon l'une des revendications 2 ou 3, **caractérisé en ce que** la surface spécifique de la composition, après calcination, est d'au plus 140 $m^2/g$, de préférence d'au plus 120 $m^2/g$, et encore plus préférentiellement d'au plus 90 $m^2/g$.

10. Procédé selon l'une des revendications 2 ou 4, **caractérisé en ce que** la surface spécifique de la composition, après calcination, est d'au plus 250 $m^2/g$, de préférence d'au plus 200 $m^2/g$, et encore plus préférentiellement d'au plus 150 $m^2/g$.

11. Procédé selon l'une quelconque des revendications précédentes **caractérisé en ce que** la surface spécifique de la composition, après calcination, est d'au moins 5 $m^2/g$, de préférence d'au moins 10 $m^2/g$, et encore plus préférentiellement d'au moins 20 $m^2/g$.

12. Procédé selon l'une quelconque des revendications 1 à 11, **caractérisé en ce que** la teneur globale massique de l'élément ou des éléments alcalins, alcalino-terreux, et terres rares dans la composition, est comprise entre 0,5 % et 70 % en poids par rapport au poids total de la composition.

13. Procédé selon la revendication 12, **caractérisé en ce que** la teneur globale massique de l'élément ou des éléments alcalins, alcalino-terreux, et terres rares dans la composition, est comprise entre 0,5 % et 40%, et de préférence entre 2 % et 35 % en poids par rapport au poids total de la composition.

14. Procédé selon l'une quelconque des revendications précédentes, **caractérisé en ce que** le gaz ou le liquide mis en contact avec la composition, est exempt d'eau.

15. Procédé selon l'une quelconque des revendications 1 à 13, **caractérisé en ce que** le gaz ou le liquide mis en contact avec la composition contient de l'eau.

16. Procédé selon l'une quelconque des revendications précédentes **caractérisé en ce que** ledit gaz provient d'un réformage catalytique du type régénératif ou de nouvelle génération.

17. Procédé selon l'une quelconque des revendications 1 à 16, **caractérisé en ce que** lesdits composés halogénés sont des composés chlorés.

**Patentansprüche**

1. Verfahren zur Entfernung, Verminderung und/oder Unterdrückung der in einem Gas oder in einer Flüssigkeit enthaltenen Halogenverbindungen, **dadurch gekennzeichnet, dass** man das Gas oder die Flüssigkeit mit einer Zusammensetzung kontaktiert, die durch Abscheidung wenigstens einer Verbindung auf Aluminiumoxid erhalten wurde, welche wenigstens ein aus den Alkalimetallen gewähltes Element umfasst, gefolgt, nach der Abscheidung, von einer Calcinierung des Aluminiumoxids bei einer Temperatur von wenigstens 600°C, wobei diese Zusammensetzung eine spezifische Oberfläche von höchstens 110 $m^2$/g bietet.

2. Verfahren zur Entfernung, Verminderung und/oder Unterdrückung der in einem Gas oder in einer Flüssigkeit enthaltenen Halogenverbindungen, **dadurch gekennzeichnet, dass** man das Gas oder die Flüssigkeit mit einer Zusammensetzung kontaktiert, die durch Abscheidung wenigstens einer Verbindung auf einem Aluminiumoxid erhalten wurde, welche wenigstens ein Element umfasst, das aus den Erdalkalimetallen und den Seltenen Erden gewählt wurde, gefolgt, nach der Abscheidung, von einer Calcinierung des Aluminiumoxids bei einer Temperatur von wenigstens 600°C.

3. Verfahren zur Entfernung, Verminderung und/oder Unterdrückung der in einem Gas oder in einer Flüssigkeit enthaltenen Halogenverbindungen, **dadurch gekennzeichnet, dass** man das Gas oder die Flüssigkeit mit einer Zusammensetzung kontaktiert, die durch Abscheidung auf einem Aluminiumoxid wenigstens einer Verbindung erhalten wurde, die wenigstens ein aus den Erdalkalimetallen gewähltes Element umfasst, gefolgt, nach der Abscheidung, von einer Calcinierung des Aluminiumoxids bei einer Temperatur von wenigstens 600°C, wobei die Zusammensetzung eine spezifische Oberfläche von höchstens 140 $m^2$/g bietet.

4. Verfahren zur Entfernung, Verminderung und/oder Unterdrückung der in einem Gas oder in einer Flüssigkeit enthaltenen Halogenverbindungen, **dadurch gekennzeichnet, dass** man das Gas oder die Flüssigkeit mit einer Zusammensetzung kontaktiert, die durch Abscheidung auf einem Aluminiumoxid wenigstens einer Verbindung erhalten wurde, die wenigstens ein aus den Seltenen Erden gewähltes Element umfasst, gefolgt, nach der Abscheidung, von einer Calcinierung des Aluminiumoxids bei einer Temperatur von wenigstens 500°C und insbesondere wenigstens 600°C, wobei die Zusammensetzung eine spezifische Oberfläche von höchstens 250 $m^2$/g bietet.

5. Verfahren nach einem der Ansprüche 1 bis 4, **dadurch gekennzeichnet, dass** die zur Abscheidung auf dem Aluminiumoxid dienenden Verbindungen anorganische Verbindungen und insbesondere anorganische Salze sind.

6. Verfahren nach einem der Ansprüche 1 bis 5, **dadurch gekennzeichnet, dass** die Verbindungen wenigstens ein Element umfassen, das aus Lithium, Natrium, Kalium, Rubidium, Cäsium, Magnesium, Calcium, Strontium, Barium, Zer, Praseodym und Lanthan gewählt ist.

7. Verfahren nach einem der Ansprüche 1 bis 4, **dadurch gekennzeichnet, dass** das Aluminiumoxid nach der Abscheidung bei einer 1200°C nicht überschreitenden Temperatur calciniert wird.

8. Verfahren nach Anspruch 1, **dadurch gekennzeichnet, dass** die spezifische Oberfläche der Zusammensetzung nach Calcinierung bei höchstens 100 $m^2$/g und noch bevorzugter bei höchstens 90 $m^2$/g liegt.

9. Verfahren nach einem der Ansprüche 2 oder 3, **dadurch gekennzeichnet, dass** die spezifische Oberfläche der Zusammensetzung nach der Calcinierung bei höchstens 140 $m^2$/g, bevorzugt bei höchstens 120 $m^2$/g und noch bevorzugter bei höchstens 90 $m^2$/g liegt.

10. Verfahren nach einem der Ansprüche 2 oder 4, **dadurch gekennzeichnet, dass** die spezifische Oberfläche der Zusammensetzung nach der Calcinierung bei höchstens 250 $m^2$/g, bevorzugt bei höchstens 200 $m^2$/g und noch bevorzugter bei höchstens 150 $m^2$/g liegt.

11. Verfahren nach einem der vorhergehenden Ansprüche, **dadurch gekennzeichnet, dass** die spezifische Oberfläche der Zusammensetzung nach der Calcinierung wenigstens 5 $m^2$/g, bevorzugt wenigstens 10 $m^2$/g und noch bevorzugter wenigstens 20 $m^2$/g beträgt.

12. Verfahren nach einem der Ansprüche 1 bis 11, **dadurch gekennzeichnet, dass** der Massengesamtgehalt des oder der Alkalimetallelemente, der Erdalkalielemente und der Seltenen Erden in der Zusammensetzung zwischen 0,5 Gew.-% und 70 Gew.-%, bezogen auf das Gesamtgewicht der Zusammensetzung, liegt.

13. Verfahren nach Anspruch 12, **dadurch gekennzeichnet, dass** der Massengesamtgehalt des oder der Alkalimetallelemente, Erdalkalielemente sowie der Seltenen Erden in der Zusammensetzung zwischen 0,5 Gew.-% und 40 Gew.-%, bevorzugt zwischen 2 Gew.-% und 35 Gew.-%, bezogen auf das Gesamtgewicht der Zusammensetzung, liegt.

14. Verfahren nach einem der vorhergehenden Ansprüche, **dadurch gekennzeichnet, dass** das mit der Zusammensetzung in Kontakt kommende Gas oder die in Kontakt kommende Flüssigkeit wasserfrei ist.

15. Verfahren nach einem der Ansprüche 1 bis 13, **dadurch gekennzeichnet, dass** das mit der Zusammensetzung in Kontakt kommende Gas bzw. die in Kontakt kommende Flüssigkeit Wasser enthält.

16. Verfahren nach einem der vorhergehenden Ansprüche, **dadurch gekennzeichnet, dass** dieses Gas aus einer katalytischen Reformierung vom regenerativen Typ oder aus einer Neubildung stammt.

17. Verfahren nach einem der Ansprüche 1 bis 16, **dadurch gekennzeichnet, dass** diese Halogenverbindungen chlorierte Verbindungen sind.

## Claims

1. A process for eliminating, reducing and/or suppressing halogenated compounds contained in a gas or a liquid, **characterized in that** the gas or liquid is brought into contact with a composition obtained by depositing at least one compound comprising at least one element selected from alkalis on an alumina, followed after deposition by calcining the alumina at a temperature of at least 600°C, said composition having a specific surface area of at most 110 m$^2$/g.

2. A process for eliminating, reducing and/or suppressing halogenated compounds contained in a gas or a liquid, **characterized in that** the gas or liquid is brought into contact with a composition obtained by depositing at least one compound comprising at least one element selected from alkaline-earths and rare earths on an alumina, followed after deposition by calcining the alumina at a temperature of at least 600°C.

3. A process for eliminating, reducing and/or suppressing halogenated compounds contained in a gas or a liquid, **characterized in that** the gas or liquid is brought into contact with a composition obtained by depositing at least one compound comprising at least one element selected from alkaline-earths on an alumina, followed after deposition by calcining the alumina at a temperature of at least 600°C, said composition having a specific surface area of at most 140 m$^2$/g.

4. A process for eliminating, reducing and/or suppressing halogenated compounds contained in a gas or a liquid, **characterized in that** the gas or liquid is brought into contact with a composition obtained by depositing at least one compound comprising at least one element selected from rare earths on an alumina, followed after deposition by calcining the alumina at a temperature of at least 500°C, more particularly at least 600°C, said composition having a specific surface area of at most 250 m$^2$/g.

5. A process according to any one of claims 1 to 4, **characterized in that** the compounds used to deposit on the alumina are inorganic compounds, more particularly inorganic salts.

6. A process according to any one of claims 1 to 5, **characterized in that** the compounds comprise at least one element selected from lithium, sodium, potassium, rubidium, caesium, magnesium, calcium, strontium, barium, cerium, praseodymium and lanthanum.

7. A process according to any one of claims 1 to 4, **characterized in that** after depositing, the alumina is calcined at a temperature which does not exceed 1200°C.

8. A process according to claim 1, **characterized in that** the specific surface area of the composition after calcining is at most 100 m$^2$/g, still more preferably at most 90 m$^2$/g.

9. A process according to claim 2 or claim 3, **characterized in that** the specific surface area of the composition after calcining is at most 140 m$^2$/g, preferably at most 120 m$^2$/g, still more preferably at most 90 m$^2$/g.

10. A process according to claim 2 or claim 4, **characterized in that** the specific surface area of the composition after calcining is at most 250 m$^2$/g, preferably at most 200 m$^2$/g, still more preferably at most 150 m$^2$/g.

11. A process according to any one of the preceding claims, **characterized in that** the specific surface area of the composition after calcining is at least 5 m$^2$/g, preferably at least 10 m$^2$/g, still more preferably at least 20 m$^2$/g.

12. A process according to any one of claims 1 to 11, **characterized in that** the overall weight content of the alkali, alkaline-earth and rare earth element or elements in the composition is in the range 0.5% to 70% by weight with respect to the total composition weight.

13. A process according to claim 12, **characterized in that** the overall weight content of the alkali, alkaline-earth and rare earth element or elements in the composition is in the range 0.5% to 40% by weight, preferably in the range 2% to 35% by weight with respect to the total composition weight.

14. A process according to any one of the preceding claims, **characterized in that** the gas or liquid which is brought into contact with the composition is free of water.

15. A process according to any one of claims I to 13, **characterized in that** the gas or liquid which is brought into contact with the composition contains water.

16. A process according to any one of the preceding claims, **characterized in that** said gas originates from regenerative type catalytic reforming or from new generation.

17. A process according to any one of claims 1 to 16, **characterized in that** said halogenated compounds are chlorinated compounds.